# EUROPEAN PATENT SPECIFICATION

(11) **EP 0 372 453 B1**
(45) Date of publication and mention of the grant of the patent: **15.11.1995**
(21) Application number: 89122324.0
(22) Date of filing: 04.12.1989
(51) Int. Cl.: C01B 3/12, B01J 8/02, B01J 8/04

(54) **Method for retrofitting in situ an axial flow carbon monoxide conversion reactor.**
Methode zur In-situ-Umrüstung eines axial durchströmten Kohlenmonoxidkonversionsreaktors.
Methode de rajustement in-situ d'un réacteur de conversion de monoxide de carbone du type flux axial.

(30) Priority: 09.12.1988 CH 4550/88
(43) Date of publication of application: 13.06.1990
(73) Proprietor: AMMONIA CASALE S.A., CH-6900 Lugano-Besso (CH); Zardi, Umberto, CH-6932 Breganzona (Ti) (CH)
(72) Inventor: Zardi, Umberto, CH-6932 Breganzona (CH); Pagani, Giorgio, CH-6900 Lugano (CH)
(74) Representative: Bottero, Claudio

(56) References cited:
- EP-A- 0 202 454
- EP-A- 0 287 765
- FR-A- 1 068 440
- GB-A- 2 055 606

## Description

This invention concerns a method for retrofitting in situ a pre-existing axial flow carbon monoxide conversion reactor comprising a pressure-resisting shell containing at least one catalyst bed, to convert the reactor to a substantially radial or axial-radial flow reactor.

One of the fundamental operations in preparing synthesis gas for NH₃ (N₂+H₂ mixture) is the conversion of CO into CO₂ and H₂ according to the following chemical reaction: 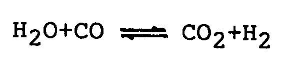
This reaction, in modern ammonia production lines, takes place in two stages at a pressure of about 30 - 40 kg/cm², namely:
- in a 1st stage at high temperature in which the gas is reacted on an iron oxide catalyst at a temperature of 350
- 400°C and in which the CO is converted from 17 - 20 mol % on a dry basis to a residual 3%, still on a dry basis;
- in a 2nd stage at low temperature, at about 200 - 250°C and using a copper-based catalyst.

During this second stage, given the lower temperature, the balance is directed towards the conversion of the carbon monoxide and it is possible to obtain very low CO residue (about 0.3 mol % on a dry basis) thus facilitating the depuration treatment which follows (elimination of CO₂ by washing with suitable solvents, and elimination of residual CO by methanation or by washing with liquid nitrogen).

Conversion reactions take place in large axial-flow converters, with adiabatic operation (therefore increasing the temperature as a result of the exothermic reaction), usually not with full board and with a noticeable pressure drop, given the axial flow and the large amounts of gas involved.

The catalysts most widely used at present are in tablets with a medium or small granulometry. Small granulometry catalysts (for example 6.4x3.2 mm) are more active than medium granulometry catalysts (for example 9.5x4.7 mm).

Their use, however, has been hindered by the fact that in axial flow catalytic beds they involve an outstandingly high pressure drop.

In order to reduce the pressure drops within the known axial flow carbon monoxide converters, French patent FR 1.068.440 has proposed to substitute the latter with new converters wherein one or more catalyst beds are flown radially by the feed and/or partially reacted gases.

In the field of ammonia or methanol synthesis and in order to reduce the energy consumptions within the known axial flow reactors, it has also been proposed by European Patent application EP-A-0 202 454 to modify in situ the pre-existing axial beds into new catalyst beds wherein the fluid flow takes place radially or axially-radially.

It should be underlined, however, that EP-A-0 202 454 or the corresponding US Patent No. 4,755,362, do not suggest that a method for the modification in situ could be advantageously applied to reactors for converting CO into CO₂ as well.

Finally, in US Patent No. 4,372,920 there is a description of axial-radial reactors ex-novo, i.e. not obtained by modifying in situ pre-existing reactors.

The problem underlying the present invention is therefore that of providing a retrofitting method which allows to obtain a carbon monoxide converter which features, on the one hand, lower pressure drops in operation and affords, on the other hand, a simpler and more compact construction, as well as an increased thermal efficiency.

This problem is solved, according to the invention, by a method which comprises the steps of:
- inserting a first perforated cylindrical wall into the reactor at a position near the shell to form a perforated, cylindrical external wall for the catalyst bed, said external wall having a diameter smaller than that of the shell;
- inserting a second perforated cylindrical wall into the reactor at a substantially centrally located position thereof, to form a perforated, cylindrical internal wall for the catalyst bed, the internal wall having a smaller diameter than that of the external wall, the external wall, the internal wall and a portion of the pressure-resisting shell defining a space for containing at least one catalyst bed;
- containing she carbon monoxide conversion catalyst tablets in said catalyst bed-containing space; and
- inserting into the reactor a heat exchanger, including means for indirect cooling, for exchanging heat between carbon monoxide feed gas and reacted gas from the catalyst bed, and positioning the heat exchanger in a substantially centrally located opening extending substantially coextensive within the catalyst bed.

The various aspects and advantages of the invention will be better apparent by the following description of some preferred but not limitative embodiments of the claimed method, given by way of illustration with reference to the reactors shown in the attached drawings, wherein they are illustrated in a schematic and partial longitudinal cross-section taken along the reactors' major axis.

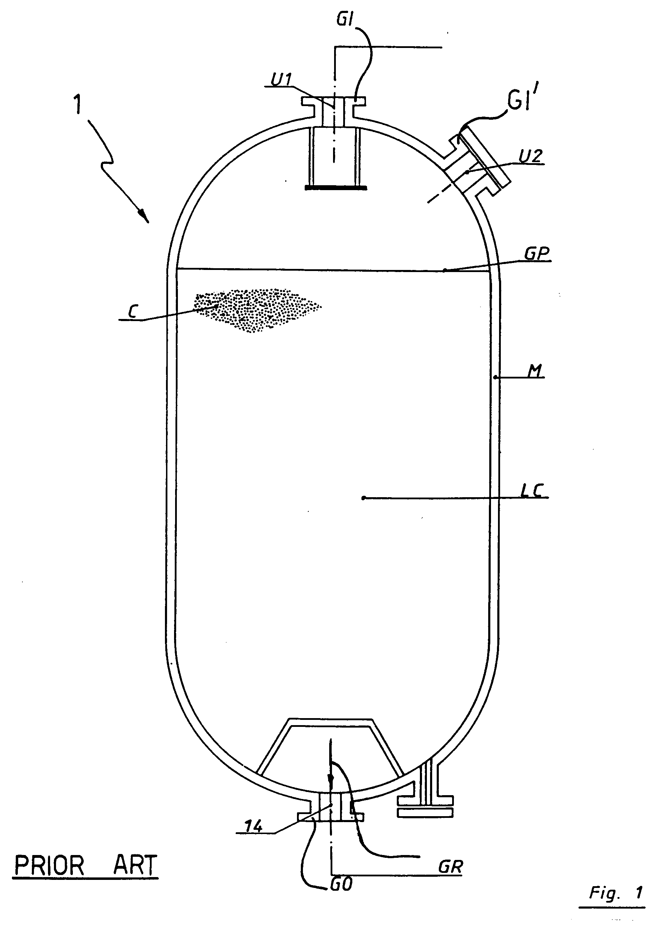

To give straight away a better idea, Fig. 1 shows very schematically a conventional axial flow reactor, while the other figures illustrate reactors obtained by means of the retrofitting method of the invention.

In the figures, M indicates the pressure-resisting shell of a pre-existing axial flow reactor 1, such shell remaining unaltered in the invention.

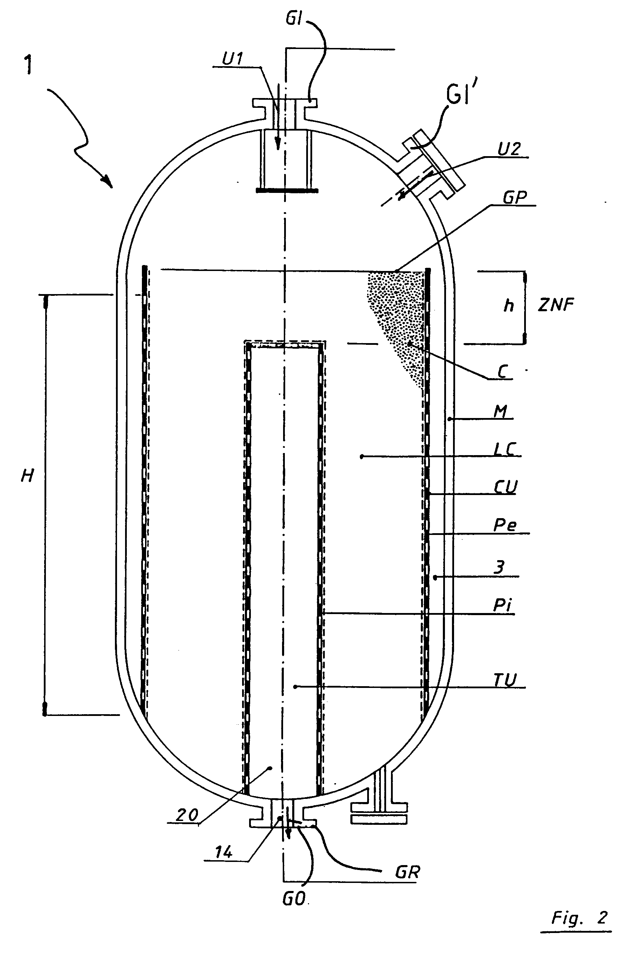

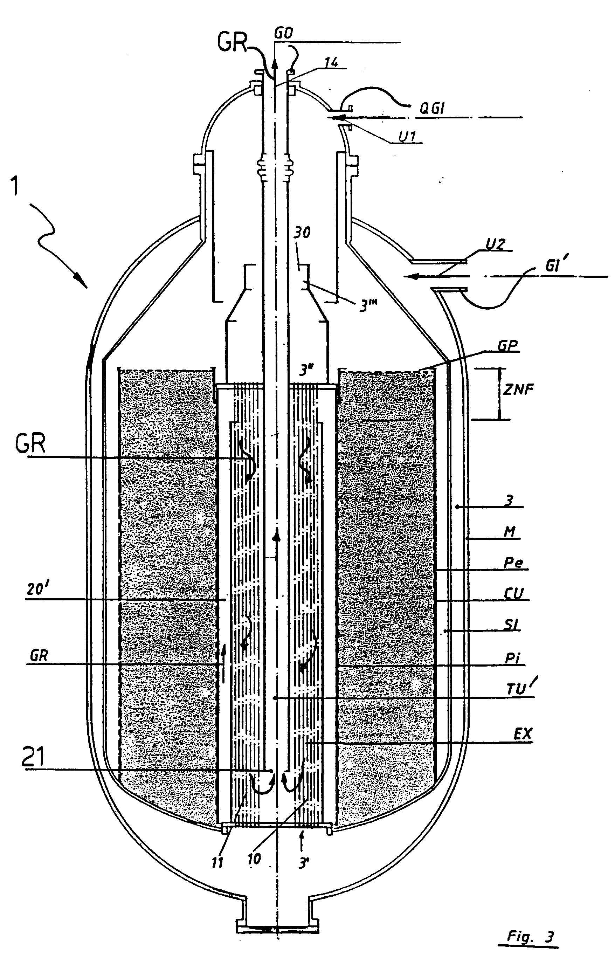

In the same way (see, for a comparison, Fig. 2), inlets GI (for example for admitting CO, indicated as U1) and GI' (for example for admitting steam, indicated as U2) are left unaltered, as well as the reacted gas (GR) outlet GO through the bottom opening 14.

In Fig. 1 the catalytic bed LC consists of a full and continuous mass of catalyst C in direct contact with the internal wall of shell M.

Gases U1 and U2 are admitted within the reactor 1 above a free surface GP of the bed LC, which is then crossed with a downwardly directed axial flow inducing a considerable pressure drop.

According to the invention, the pre-existing axial reactor 1 is modified in situ by introducing inside it (by way, for example, of a manhole, not shown) a collector or a perforated cylindrical external wall Pe and a collector or a cylindrical internal wall Pi, which preferably has a single unperforated longitudinal portion ZNF with height "h", both contained within a cartridge CU. The external wall Pe is perforated all along its longitudinal length H.

In the retrofitted reactor shown in Fig. 2, the internal wall Pi is shaped like an inverted tube TU wherein a gas collecting chamber 20 is defined.

The incoming gas now runs through the upper zone ZNF with height "h" with an axial flow and through the major zone with height "H" with an inwardly directed radial flow from an annular airspace 3 to the gas collecting chamber 20.

To make it easier to understand the invention, in Fig. 2 it has been deliberately omitted to show heat exchangers which are arranged inside Pi.

Fig. 3 shows another retrofitted reactor comprising a central tube TU' and a tube heat exchanger EX inside Pi.

In Fig. 3 the fresh reaction gas U2 coming in from GI' runs from top to bottom along the airspace 3 between the shell M and the cartridge CU (thus keeping cool the internal face of M), flows upward again (3') inside tubes 10 and 11 of the exchanger EX (being pre-heated by reacted gas GR circulating outside tubes 10 and 11), leaves (3'') from EX and (3''') from outlet 30, mixes with fresh reaction gas U1 coming in from quenching means QGI and flows downwards again through the catalytic bed LC.

In this case as well, the unperforated smaller portion ZNF of the bed LC is axially flown by the gases, while the rest of the bed is flown radially all along zone H-h, where H is the perforated height of the external wall Pe, from an outer airspace SI to an inner airspace 20' defined between Pi and EX.

The reacted gases GR then flow upwardly in the airspace 20' (as already mentioned), downwardly and shell-side in the exchanger EX so as to impinge onto the tubes 10 and 11, reach an inlet 21 of the central tube TU' and finally leave the reactor 1 through opening 14.

Because of the substantially radial flow within the bed LC, the catalyst C can now have a small granulometry.

Equally advantageous types of embodiment have been tried, with Pi totally perforated and Pe substantially perforated, with catalytic bed LC having a smaller solid portion in contact with TU etc., more particularly according to the various embodiments described in US Patents No. 4,372,920 and No. 4,755,362, so that the embodiments shown in the figures - even though preferred - must be understood to be above all illustrative and non-limitative.

Preferably, the external collector Pe and internal collector Pi are in several parts (for example 8 pieces) each of a size capable of passing through the manhole; the pieces are assembled (welded) inside the shell M and cartridge CU.

Preferably, the parts forming a collector consist of a net and of a bridge-perforated plate.

## Claims

1. A method for retrofitting in situ a pre-existing axial flow carbon monoxide conversion reactor comprising a pressure-resisting shell (M) containing at least one catalyst bed (LC), to convert the reactor to a substantially radial or axial-radial flow reactor, which method comprises the steps of:
- inserting a first perforated cylindrical wall into the reactor at a position near the shell (M) to form a perforated, cylindrical external wall (Pe) for the catalyst bed (LC), said external wall (Pe) having a diameter smaller than that of the shell (M);
- inserting a second perforated cylindrical wall into the reactor at a substantially centrally located position thereof, to form a perforated, cylindrical internal wall (Pi) for the catalyst bed, the internal wall (Pi) having a smaller diameter than that of the external wall (Pe), the external wall (Pe), the internal wall (Pi) and a portion of the pressure-resisting shell (M) defining a space for containing at least one catalyst bed (LC);
- containing the carbon monoxide conversion catalyst tablets in said catalyst bed-containing space; and
- inserting into the reactor a heat exchanger (EX), including means for indirect cooling, for exchanging heat between carbon monoxide feed gas and reacted gas from the catalyst bed (LC), and positioning the heat exchanger (EX) in a substantially centrally located opening extending substantially coextensive within the catalyst bed (LC).

2. A method according to claim 1, characterized in that one of said external (Pe) and internal (Pi) walls include an unperforated portion (ZNF) for causing axial-radial flow through the catalyst bed (LC).

3. A method according to claim 1, characterized in that it further comprises the step of positioning the lower ends of the first and second perforated, cylindrical walls in contact with the pressure-resisting shell (M) to define an open top portion of the catalyst-containing space.

4. A method according to claim 1, characterized in that it further comprises the steps of inserting a cartridge (CU) wall for containing the external (Pe) and internal (Pi) walls and the catalyst bed (LC) into the reactor, and positioning said cartridge (CU) between the external wall (Pe) and the shell (M).

5. A method according to claim 1, characterized in that it further comprises the steps of introducing into the reactor means for adding quench gas (QGI) therein and locating the quench gas introducing means above the catalyst bed.

6. A method according to claim 1, characterized in that the carbon monoxide conversion catalyst tablets are 9.5 x 4.7 mm.

7. A method according to claim 1, characterized in that the carbon monoxide conversion catalyst tablets are 6.4 x 3.2 mm.

## Patentansprüche

1. Verfahren zum Nachrüsten eines bestehenden AxialstromKohlenmonoxid-Umwandlungsreaktors vor Ort, wobei der Reaktor einen druckfesten Mantel (M) aufweist, der mindestens ein Katalysatorbett (LC) enthält, um den Reaktor in einen Reaktor mit im wesentlichen radialer oder axialradialer Durchströmung umzuwandeln, mit folgenden Verfahrenschritten:
- Einfügen einer ersten perforierten zylindrischen Wand in den Reaktor bei einer Position in der Nähe des Mantels (M), um eine perforierte zylindrische Außenwand (Pe) für das Katalvsatorbett (LC) zu bilden, wobei die Außenwand (Pe) einen Durchmesser hat, der kleiner ist als der des Mantels (M),
- Einfügen einer zweiten perforierten zylindrischen Wand in den Reaktor bei einer im wesentlichen zentral angeordneten Position des Reaktors, um eine perforierte zylindrische Innenwand (Pi) für das Katalysatorbett zu bilden, wobei die Innenwand (Pi) einen kleineren Durchmesser als die Außenwand (Pe) hat, und wobei die Außenwand (Pe), die Innenwand (Pi) und ein Teil des druckfesten Mantels (M) einen Raum zum Einschließen von mindestens einem Katalysatorbett (LC) eingrenzt,
- Vorsehen der Kohlenmonoxid-Umwandlungs-Katalysatortabletten in dem Raum, welcher die Katalyastorbetten einschließt, und
- Einfügen eines Wärmetauschers (EX) in den Reaktor, welcher Mittel zum indirekten Kühlen aufweist, um Wärme zwischen Kohlenmonoxid-Zuführgas und Reaktionsgas von dem Katalysatorbett (LC) auszutauschen, und Positionieren des Wärmetauschers (EX) in einer im wesentlichen zentral angeordneten Öffnung, welche sich im wesentlichen gleich wie das Katalysatorbett (LC) erstreckt.

2. Verfahren nach Anspruch 1, dadurch **gekennzeichnet**, daß eine der äußeren (Pe) und inneren (Pi) Wände einen nicht perforierten Abschnitt (ZNF) aufweist, um einen axial-radialen Strom durch das Katalysatorbett (LC) zu bewirken.

3. Verfahren nach Anspruch 1, dadurch **gekennzeich**, **net**, daß ferner die unteren Enden der ersten und der zweiten perforierten zylindrischen Wand in Kontakt mit dem druckfesten Mantel (M) angeordnet werden, um einen offenen oberen Abschnitt des Raumes zu definieren, welcher den Katalysator einschließt.

4. Verfahren nach Anspruch 1, dadurch **gekennzeichnet**, daß ferner eine Patronen (CU)- Wand zum Einschließen der äußeren (Pe) und der inneren (Pi) Wand und des Katalysatorbetts (LC) in den Reaktor eingefügt wird und die Patrone (CU) zwischen der Außenwand (Pe) und dem Mantel (M) positioniert wird.

5. Verfahren nach Anspruch 1, dadurch **gekennzeichnet**, daß ferner Mittel zum Zusetzen von Quenchgas (QGI) in den Reaktor in diesen eingefügt werden und daß die Mittel zum Zusetzen von Quenchgas über dem Katalysatorbett angeordnet werden.

6. Verfahren nach Anspruch 1, dadurch **gekennzeichnet**, daß die Katalysatortabletten zum Umwandeln von Kohlenmonoxid eine Größe von 9,5 x 4,7 mm haben.

7. Verfahren nach Anspruch 1, dadurch **gekennzeichnet**, daß das die Katalysatortabletten zum Umwandeln von Kohlenmonoxid eine Größe von 6,4 x 3,2 mm haben.

## Revendications

1. Procédé de réadaptation sur place d'un réacteur préexistant de transformation de monoxyde de carbone à flux axial, comprenant une enveloppe résistant à la pression (M) contenant au moins un lit de catalyseur (LC), afin de transformer le réacteur en un réacteur à flux sensiblement radial ou axial-radial, lequel procédé comprend les étapes consistant à :
- introduire une première paroi cylindrique perforée dans le réacteur en un emplacement proche de l'enveloppe (M) afin de former une paroi externe cylindrique perforée (Pe) pour le lit de catalyseur (LC), ladite paroi externe (Pe) ayant un diamètre inférieur à celui de l'enveloppe (M) ;
- introduire une seconde paroi cylindrique perforée dans le réacteur en un emplacement situé sensiblement au centre de celui-ci, afin de former une paroi interne cylindrique perforée (Pi) pour le lit de catalyseur, la paroi interne (Pi) ayant un diamètre inférieur à celui de la paroi externe (Pe), la paroi externe (Pe), la paroi interne (Pi) et une partie de l'enveloppe résistant à la pression (M) définissant un espace pour loger au moins un lit de catalyseur (LC) ;
- confiner les tablettes de catalyseur de transformation de monoxyde de carbone dans ledit espace de logement de lit de catalyseur ; et
- introduire dans le réacteur un échangeur de chaleur (EX), comprenant des moyens destinés à un refroidissement indirect, pour l'échange de chaleur entre le gaz d'arrivée contenant du monoxyde de carbone et le gaz, issu de la réaction et venant du lit de catalyseur (LC), et à placer l'échangeur de chaleur (EX) dans une ouverture, située sensiblement de manière centrale et ayant sensiblement la même étendue que le lit de catalyseur (LC), à l'intérieur de celui-ci.

2. Procédé selon la revendication 1, caractérisé en ce que l'une desdites parois externe (Pe) et interne (Pi) comporte une partie non perforée (ZNF) pour provoquer un écoulement axial-radial à travers le lit de catalyseur (LC).

3. Procédé selon la revendication 1, caractérisé en ce qu'il comprend en outre l'étape consistant à placer les extrémités inférieures des première et seconde parois cylindriques perforées en contact avec l'enveloppe résistant à la pression (M) afin de définir une partie supérieure ouverte de l'espace de logement de catalyseur.

4. Procédé selon la revendication 1, caractérisé en ce qu'il comprend en outre les étapes consistant à introduire dans le réacteur une paroi formant cartouche (CU), pour contenir les parois externe (Pe) et interne (Pi) et le lit de catalyseur (LC), et à placer ladite cartouche (CU) entre la paroi externe (Pe) et l'enveloppe (M).

5. Procédé selon la revendication 1, caractérisé en ce qu'il comprend en outre les étapes consistant à introduire dans le réacteur des moyens pour y ajouter un gaz de refroidissement (QGI) et à placer les moyens d'introduction de gaz de refroidissement au-dessus du lit de catalyseur.

6. Procédé selon la revendication 1, caractérisé en ce que les tablettes de catalyseur de transformation de monoxyde de carbone font 9,5 x 4,7 mm.

7. Procédé selon la revendication 1, caractérisé en ce que les tablettes de catalyseur de transformation de monoxyde de carbone font 6,4 x 3,2 mm.
